# EUROPEAN PATENT SPECIFICATION

(11) **EP 1 618 792 B1**
(45) Date of publication and mention of the grant of the patent: **16.07.2014**
(21) Application number: 04729733.8
(22) Date of filing: 27.04.2004
(51) Int. Cl.: A23C 19/06, A23C 19/068, A23C 19/09, A23C 19/08

(54) **PROCESS FOR PRODUCING CHEESE**
VERFAHREN ZUR HERSTELLUNG VON KÄSE
PROCESSUS DE PRODUCTION DE FROMAGE

(30) Priority: 30.04.2003 JP 2003125363
(43) Date of publication of application: 25.01.2006
(73) Proprietor: MORINAGA MILK INDUSTRY CO., LTD., Minato-ku, Tokyo 108-8384 (JP)
(72) Inventor: TAKAHASHI, Kiyotaka, c/o Morinaga Milk Ind Co. Ltd, Zama-shi, Kanagawa 228-0004 (JP); MIYAUCHI, Kiyotaka, c/o Morinaga Milk Ind. Co. Ltd, Zama-shi, Kanagawa 228-0004 (JP); MIZUNO, Rei, c/o Morinaga Milk Industry Co., Ltd., Zama-shi, Kanagawa 228-0004 (JP); MIYAKAWA, Hiroshi, c/o Morinaga Milk Ind. Co. Ltd., Zama-shi, Kanagawa 228-0004 (JP); OCHI, Hiroshi, c/o Morinaga Milk Industry Co. Ltd., Zama-shi, Kanagawa 228-0004 (JP)
(74) Representative: Ahner, Philippe
(86) International application number: PCT/JP2004/006078
(87) International publication number: WO 2004/095936

(56) References cited:
- DE-A1- 1 692 354
- JP-A- 3 160 945
- JP-A- 5 252 866
- JP-A- 59 198 938
- JP-A- 63 071 147
- US-A- 5 200 216
- US-A- 5 902 625
- US-B1- 6 455 092

## Description

### TECHNICAL FIELD

The present invention relates to a process for producing cheese by going through a step of stretching cheese curds in hot water.

### BACKGROUND ART

Examples of cheeses having a stretching step in their production process include pasta filata type cheeses (pasta: cheese curds in Italian, filatura: to stretch or knead in Italian) such as Mozzarella, Provolone, Scamorza and Caciocavallo. In addition, cheese having rice cake-like elasticity and capable of being torn up is another known example.

More specifically, the production processes of these cheeses are characterized in the use of a step of stretching (kneading) cheese curds prepared from raw material milk by adding hot water (stretching water) to plasticize the cheese curds.

Although cheese having a characteristic texture and a rice cake-like elasticity is obtained as a result of going through this stretching step, in order to provide products of higher quality, it is desired to improve undesirable textures such as gum-like adhesiveness, hard rubber-like chewiness, and residual particles in the mouth when eating after baking.

In consideration of these circumstances, the objects of the present invention are to provide a cheese production process that enables the obtaining of cheese having a preferable rice cake-like elastic texture by improving the gum-like adhesive texture, hard rubber-like chewiness, and residual particles in the mouth when eating after baking, of cheese that is produced by going through a step of stretching cheese curds in hot water, and a cheese that is obtained by this production process.

Examples of documents describing prior art relating to the present invention are listed below.

Japanese Examined Patent Application, Second Publication No. Hei 8-29046 relates to technology for homogeneously dispersing various food materials such as green peppers, smoked cheese, dry sausage, mushrooms and tomato powder in pasta filata cheeses at high yield.

Japanese Examined Patent Application, Second Publication No. Sho 57-16617 describes that the texture of a low-fat, high-protein type of cheese having a high protein content and low fat content tends to typically have a gum-like adhesive texture and a hard rubber-like chewy texture, and that the addition of an emulsifier to low-fat cheese and the application of a shearing process are carried out to improve this undesirable texture.

Japanese Examined PatentApplication, Second Publication No. Hei 7-13 describes a process whereby cheese is obtained that has properties resembling heated melty cheese or heated Mozzarella cheese by adding a sweet potato adhesive to existing cheese products or during an arbitrary step of existing cheese production processes.

The patent application JP 63 071147 discloses a method for producing cheese having fine fibrous structure obtained by blending a solution of acid casein at proper pH with cheese curds, followed by heating and kneading.

The patent US 5 902 625 discloses a process for manufacturing a soft or semi-soft fibrous cheese that uses the "casein hydrolysate" as a dairy solid.

The patent US 6 455 092 discloses a process for manufacturing a cheese product, which can implement an emulsifying and calcium-complexing agent such as citric acid and phosphates.

### DISCLOSURE OF INVENTION

The cheese production process of the present invention comprises stretching cheese curds in hot water the temperature of which is within the range of 80°C to 100°C and contacting the cheese curds and a texture modifier capable of binding or adsorbing calcium which is a casein phospho oligopeptide mixture either before or simultaneously with the stretching.

In addition, the present invention provides a cheese produced according to the production process of the present invention.

According to the present invention, a cheese is obtained that has a favorable and rice cake-like elastic texture.

### BEST MODE FOR CARRYING OUT THE INVENTION

The following provides an explanation of an embodiment of the present invention using the example of the production of pasta filata cheese.
(1) First, processing such as pasteurization is carried out according to ordinary methods on the raw material milk. Cow's milk or processed milk is used as the raw material milk. In the present embodiment, the pasteurization method preferably includes batch pasteurization in which the raw material milk is heated from the refrigeration temperature to 72 °C over the course of about 10 minutes, and after having reached a temperature of 72 °C, immediately cooling followed by controlling the temperature to a predetermined refrigeration temperature in about 10 minutes. Alternatively, continuous pasteurization may also be carried out, and in that case, the raw material milk is heat treated for about 15 seconds typically at a temperature of 71 °C to 75 °C.
(2) Next, the raw material milk is coagulated to form cheese curds. More specifically, following heat treatment, the raw material milk is cooled to a temperature suitable for fermentation by a starter, followed by addition of the starter, fermentation, the addition of a coagulating enzyme (rennet) and coagulation. Lactic acid bacteria are normally used as the starter. Although varying according to the conditions, fermentation time is from about 15 minutes to 2 hours, and is preferably about 50 minutes in the present embodiment. The addition of rennet can be carried out according to ordinary methods, whereby the coagulate containing cheese curds and whey is obtained.
(3) Next, the whey present in the resulting coagulate is extracted to obtain cheese curds. More specifically, the coagulate is thin sliced (shredded) to about 5 cm, for example, and allowed to be in a quiescent to cause the whey inside to be expelled.
(4) Next, the cheese curds from which the whey has been removed are collected and accumulated. As a result, expulsion of the whey proceeds as the cheese curds are pressed together by their own weight. In addition, fermentation by lactic acid bacteria proceeds during this accumulation as well, and the pH of the cheese curds decreases as lactic acid is formed. When the pH of the cheese curds has decreased to 5.1 to 5.4, and preferably 5.3, the cheese curds are milled into squares measuring about 2 cm on a side.
(5) Next, hot water containing a texture modifier is added to the cheese curds followed by stretching in this hot water. As a result, the cheese curds are stretched while in contact with the casein phospho oligopeptide mixture. The cheese curds are plasticized in the hot water and additionally structured due to the application of external force such as kneading and stretching causing them to have the property of elasticity.

There is no particular limitation on the casein phospho oligopeptide mixture provided it can be added to foods and is capable of binding to or adsorbing calcium. Compounds which bind to or adsorb calcium, thereby resulting in solubilization of the calcium are known, and examples of these compounds include caseins such as casein and sodium caseinate, proteins or peptides such as casein hydrolysates, and sugars such as lactose. Alternatively, compounds which bind to or adsorb calcium, thereby resulting in the formation of a precipitate containing calcium are also known, and examples of these compounds include organic acid salts such as citrates and inorganic salts such as phosphates. Only one type of texture modifier is used. Texture modifiers derived from milk are known and caseins and casein hydrolysates are also known.

There is no particular limitation on the form of the texture modifier, and may be in the form of a purified product of the aforementioned ingredient (texture modifier) which is capable of binding to or adsorbing calcium, or in the form of a composition that contains said ingredient (texture modifier). For example, it may also be used in the form of various food materials containing said ingredient (texture modifier).

When contacting the texture modifier and the cheese curds, a liquid containing the texture modifier is preferably contacted with the cheese curds, and in the present embodiment, the texture modifier is dissolved in the hot water used for stretching.

If the concentration of the texture modifier in the hot water is too low, the effects of adding the texture modifier are unable to be obtained so that the content of the ingredient (texture modifier) capable of binding to or adsorbing calcium (total amount when two or more ingredients are contained) is preferably 0.5% by weight or more, and more preferably 1% by weight or more.

On the other hand, there is no particular limitation on the upper limit of the concentration of the texture modifier in the liquid contacted with the cheese curds.

The temperature of the hot water in the stretching step is within the range of 80 °C to 100 °C, and more preferably about 87 °C ±2 °C. If the temperature of the hot water is within the aforementioned range, the temperature of the cheese curds in the stretching step can be maintained at a suitable temperature (60 °C ± 5 °C). If the temperature of the hot water is too high, the cheese curds end up dissolving in the hot water, while if the temperature is too low, the cheese curds fail to bind and become structured.

In addition, there is no particular limitation on the amount of hot water added provided the cheese curds are maintained at a suitable temperature (60 °C ± 5 °C) during the stretching step. For example, the amount of hot water added can be preferably 0.5 parts by weight or more with respect to 1 part by weight of cheese curds.

Examples of stretching methods include a method in which the cheese curds are placed in a predetermined container followed by the addition of hot water containing a texture modifier and stretching directly by hand (hand-stretching), and a method in which the cheese curds are placed in a stretching machine and stretched while continuously contacting with hot water containing a texture modifier (pumping), and either method can be selected. Furthermore, in the case of stretching by hand-stretching and so forth, it is preferable to stretch the cheese curds while replacing the hot water with fresh hot water several times to maintain the temperature of the cheese curds at a suitable temperature (60 °C ± 5 °C) since the temperature of the added hot water falls during the course of stretching. This enables the cheese curds to be stretched efficiently. (6) Finally, the cheese curds are shaped to a desired size and shape following stretching and then subjected to salting and so forth to obtain the finished product form. In the present embodiment, the shaped cheese is preferably packaged after placing in saltwater and cooling to about 10 °C to 12 °C.

According to this type of process, it is possible to produce a pasta filata cheese in which the cheese obtained following stretching is unlikely to have a gum-like adhesive texture or hard rubber-like chewy texture, and thus have a rice cake-like elastic texture without leaving residual particles in the mouth when eaten after baking.

In addition, although low-fat, high-protein type pasta filata cheese in particular, in which the ratio of the protein content to the fat content in the cheese, namely the ratio of protein to fat, is 1.2 or more, had the prominent problems of a gum-like adhesive texture and a hard rubber-like chewy texture, according to the production process of the present embodiment, pasta filata cheese having a satisfactory texture as previously described is obtained even in the case of such low-fat, high-protein types.

Thus, in addition to having added value in reflection of the current health boom, pasta filata cheese of high quality can be obtained.

Furthermore, the value of the ratio of protein to fat of cheese can be controlled by adjusting the proportions of protein and fat in raw material milk.

Furthermore, in the present embodiment, although a texture modifier was dissolved in hot water used during stretching so as to contact the texture modifier with the cheese curds simultaneous to stretching, the texture modifier may also be contacted with the cheese curds prior to stretching. In this case, although the effects are slightly diminished as compared with dissolving the texture modifier in hot water during stretching as in the present embodiment, the texture of the cheese can be similarly improved.

Namely, although effects like those previously described cannot be obtained if the texture modifier is contacted with the cheese prior to the formation of cheese curds, if it is contacted after the cheese curds have been formed, texture improving effects are obtained by contacting the texture modifier with the cheese curds prior to stretching.

More specifically, it is preferable to provide a step in which a liquid containing the texture modifier is contacted with the cheese curds prior to stretching for a suitable amount of time.

For example, in the step described in (3) above, since whey is discharged immediately after the coagulate are thinly sliced, if a texture modifier is contained in this whey, the cheese curds and texture modifier can be contacted during the time the cheese curds are allowed to be in a quiescent to expel the whey present within the cheese curds. The amount of texture modifier added in this case should be set based on the fact that effects are obtained if the concentration of the aforementioned ingredient able to bind to or adsorb calcium in the whey that contacts the cheese curds is preferably 0.5 % by weight or more, and more preferably 1% by weight or more.

In addition, although the example of pasta filata cheese was used in the aforementioned embodiment, the present invention is not limited to this, but rather the present invention can be applied to various types of cheese provided it has a step in its production process in which cheese curds are stretched in hot water, as well as to cheese-like foods and so forth that use vegetable oil as a portion of their raw materials. In the present description, the "cheese curds" on which stretching is carried out include not only those obtained by coagulating a raw material milk and removing the whey, but also young cheese prepared by going through other steps as well.

The following clarifies the effects of the present invention by indicating its specific examples.

### Reference Example 1 (Present Invention example)

A casein phospho oligopeptide mixture described in claim 1 of Japanese Patent No. 2887302 was prepared.

Namely, 200 g of commercially available acid casein (produced in New Zealand) were dissolved while heating in 10 % aqueous sodium hydroxide solution at a concentration of 10%, and the pH of the resulting solution was adjusted to 8.0 followed by pasteurizing for 10 minutes at 90 °C and then cooling to 45 °C. 10 g of Pancreatin F (trademark, purchased from Amano Enzyme), 2 g of Protease N Amano (trademark, purchased from Amano Enzyme) and 4 g of lactic acid bacteria extract were added to this casein solution (total of 490,000 activity units), and after hydrolyzing for 24 hours at 45°C, the solution was heated for 5 minutes at 90°C to deactivate the enzyme followed by filtering to remove precipitates and freeze-drying to obtain about 170 g of the hydrolysates. 18 g of these hydrolysates were dissolved in water at a concentration of 20%. After removing insoluble solids, the solution was adsorbed by applying to a column (10 x 12 cm) filled with Sephadex G-10 (purchased from Pharmacia) followed by eluting at a flow rate of 10 ml/min using ion exchange water. 200 to 500 ml of the fraction were collected and freeze-dried to obtain about 6 g of a low molecular weight peptide powder.

The following clarifies the effects of the present invention by indicating its specific examples.

### Reference Example 2 (Comparative example)

190 kg of purified water were added to 10 kg of commercially available casein (trade name, ALACID (purity of protein: 84 %); purchased from New Zealand Milk Products) and adequately dispersed followed by the addition of 2.5 kg of 10 % aqueous sodium hydroxide solution. The pH of the solution was adjusted to 7.0 and the casein was completely dissolved to prepare an aqueous casein solution having a concentration of about 5%. This aqueous casein solution was pasteurized for 10 minutes at 80°C after which the liquid temperature was adjusted to 45 °C. Next, 25,000,000 activity units (2,976 activity units per 1 gram of protein) of pancreatin (purchased from Amano Enzyme) were added, and after hydrolyzing by holding at a temperature of 45 °C, the liquid was heated for 10 minutes at 85 °C to deactivate the enzyme and stop the enzyme reaction after hydrolyzing for 5 hours. The resulting solution containing the casein hydrolysates was concentrated according to ordinary methods and then dried to obtain about 11 kg of powdered casein hydrolysates.

### Test Example 1

Evaluation tests of the procedure in the stretching step using a texture modifier of the present invention as well as sensory analysis relating to cheese texture were carried out.

### (1) Samples

Each of the samples shown below were added at the concentrations shown in Table 1 as texture modifiers to prepare hot water, and this was then tested by using during the stretching step. In addition, hot water not containing a texture modifier was used in a control test.
Sample 1: Casein phospho oligopeptide mixture obtained in Reference Example 1 (Present invention sample)
Sample 2: Casein hydrolysates obtained in Reference Example 2 (Comparative sample)
Sample 3: Sodium caseinate (Comparative sample)

### (2) Testing Methods

Pasta filata cheese for pizza was produced using a process similar to Example 1 described later. The aforementioned samples were respectively contained in hot water and used as texture modifiers when stretching the cheese curds.

At this time, the ease of operation of the cheese curd stretching step as well as the structure of the pasta filata cheese were evaluated to one of the five levels indicated below. The lower the evaluation score is, the better the stretching step is. Those results are shown in Table 1.

### Ease of Operation of Stretching Step

Score:
5: Pasta filata cheese is unable to be produced due to stretching defect.
4: Pasta filata cheese is able to be produced, while stretching defect occurs due to cheese curds being quite hard or quite soft.
3: The structure of the produced pasta filata cheese is satisfactory, while some degree of stretching defect occurs due to the cheese curds being somewhat hard or somewhat soft
2: The structure of the produced pasta filata cheese is satisfactory, and stretching step is satisfactory, while the cheese curds are slightly hard or slightly soft
1: The structure of the produced pasta filata cheese is homogeneous and rice cake-like, and stretching step of the cheese curds is satisfactory.

### Sensory Analysis

Each of the pasta filata cheeses produced as described above were shredded, uniformly placed on a crust covered with pizza sauce and baked for 4 minutes in an oven preheated to 320°C for use in the sensory analysis. The sensory analysis was conducted by having 10 panelists score the texture when eaten by evaluating to one of five levels followed by determination of the average score. The lower the evaluation score is, the better the texture is. Those results are shown in Table 1.

Score:
5: Particles remain without broken up in the mouth
4: Particles remain although slightly broken up in the mouth
3: Some particles remain although broken up in the mouth
2: Particles only remain slightly although easily broken up in the mouth
1: No particles remain and easily broken up in the mouth

Furthermore, the ratios of protein to fat of each of the pasta filata cheeses produced in this test were all within the range of 1.2 to 1.5, and were of the low-fat, high-protein type.

**Table 1**

| Sample | Concentration (wt%) | Stretching Step Evaluation Score | Sensory Evaluation Score |
|---|---|---|---|
| Sample 1 | 1 | 2 | 4 |
| Sample 1 | 10 | 2 | 2 |
| Sample 2 | 10 | 4 | 3 |
| Sample 3 | 10 | 4 | 3 |
| Control Sample | - | 2 | 5 |

### (3) Test Results

According to the results of Table 1, although pasta filata cheese obtained in the control test produced using a process similar to conventional pasta filata cheese was nearly satisfactory in the state of the stretching step, since the evaluation score of the sensory analysis was 5, the cheese was found not to break up easily in the mouth and to cause particles to remain in the mouth.

In addition, Sample 1 according to the present invention, which used a casein phospho oligopeptide mixture for the texture modifier, demonstrated satisfactory stretching even though the cheese curds were somewhat hard, and the structure of the produced pasta filata cheese was satisfactory. On the other hand, according to the results of the sensory analysis, in the case of producing by adding to hot water to a concentration of 1 % by weight, the evaluation score was 4, indicating that the cheese was nearly satisfactory with respect to particles remaining in the mouth although it was broken up slightly in the mouth. In contrast, in the case of adding to a concentration of 10 % by weight, the cheese was evaluated to a score of 2 and determined to have a more satisfactory texture.

Moreover, in the case of comparative Samples 2 and 3, which used casein hydrolysates and sodium caseinate as the texture modifiers, the cheese curds were quite soft and stretching was defective. However, it was still possible to produce pasta filata cheese, and based on the results of the sensory analysis, the texture of the produced pasta filata cheese was nearly satisfactory in that particles somewhat remained in the mouth although it was broken up in the mouth.

On the basis of these results, when pasta filata cheese is produced according to the production process of the present invention using a casein phospho oligopeptide mixture, as the texture modifier, it was determined that pasta filata cheese can be produced which, together with having the unique property of having rice cake-like elasticity, has a satisfactory texture in which it is broken up easily in the mouth and is unlikely to leave particles remaining in the mouth.

### Text Example 2

This test was carried out to evaluate the effects of the texture modifier when producing cheeses having different ratios of protein to fat in a process that has a stretching step.

### (1) Sample Preparation

* The pasta filata cheese for pizza produced in Example 1 (ratio of protein to fat = 1.41) was used as test sample a.
* Pasta filata cheese for pizza adjusted to a protein content of 29.7 % by weight and fat content of 21.1 % by weight (ratio of protein to fat = 1.41) and produced in the same manner as Example 1 with the exception of not using a texture modifier in the stretching step was used as control sample a.
* Pasta filata cheese for pizza adjusted to a protein content of 24.4 % by weight and fat content of 26.0 % by weight (ratio or protein to fat = 0.94) and produced in the same manner as Example 1 was used as test sample b.
* Pasta filata cheese for pizza adjusted to protein content of 18.0 % by weight and fat content of 20.5 % by weight (ratio of protein to fat = 0.88) and produced in the same manner as Example 1 with the exception of not using a texture modifier in the stretching step was used for control sample b.

### (2) Testing Methods

Each sample was evaluated in the same manner as the sensory analysis relating to texture of Test Example 1.

### (3) Test Results

The sensory evaluation scores of each sample obtained from this test are shown below.

### Test sample a: 2

Control sample a: 5

### Test sample b: 2

Control sample b: 3

On the basis of the above results, texture was determined to be improved as compared with production processes of the prior art as a result of using a texture modifier in the stretching step.

In particular, since the difference between the evaluation results for test sample a and control sample a is larger than the difference between the evaluation results for test sample b and control sample b, the effects of improving texture are clearly more prominently obtained in low-fat, high-protein types having a large ratio of protein to fat.

### Example 1

A pasta filata cheese for pizza was produced according to the process described below.

10 kg of milk adjusted to a protein content of 4.99 % by weight and fat content of 3.54 % by weight (ratio of protein to fat = 1.41 (total fat and protein content = 8.49 % by weight)) were pasteurized at an ultimate temperature of 72 °C and then cooled. Next, lactic acid bacteria starter was added to the milk to a concentration of 2.4 % by weight and fermented for 50 minutes. Subsequently, milk coagulating enzyme in the form of rennet was added in an amount that coagulates the milk in amount 20 minutes (final concentration: 11.9 ppm) so as to coagulate the milk. Next, the resulting milk coagulate, namely cheese curds (roughly 1.7 kg), were cut to a size of about 5 cm. Since cutting causes water to be expelled from the cheese curds, the total amount of whey that had accumulated about 2 hours after the addition of rennet was discarded. The cheese curds were then collected and accumulated until the pH reached 5.3, after which they were milled into 2 cm squares.

On the other hand, hot water at 87 °C ± 2 °C containing a texture modifier dissolved to 10 % by weight was prepared. In the present example, the casein phospho oligopeptide mixture prepared in the aforementioned Reference Example 1 was used as texture modifier. 750 g of this hot water were added to 750 g of the aforementioned milled cheese curds and after immersing for 1 minute, the cheese curds were stretched for 2 minutes followed by gathering the stretched cheese curds. The entire amount of hot water was discharged, and 750 g of fresh hot water at 87 °C ± 2 °C containing the same amount of the texture modifier were added followed by stretching for 1 minute 30 seconds. Subsequently, the entire amount of hot water was again discharged and 450 g of the same hot water at 87 °C ± 2 °C were added followed by stretching for 1 minute. The temperature of the cheese curds at completion of stretching was about 60 °C.

Following stretching, the cheese curds were transferred to a plastic mold and cooled with cold water until they reached a temperature of 10 °C to 12 °C to produce about 730 g of pizza pasta filata cheese.

### Example 2

A pizza pasta filata cheese was produced according to the process described below.

10 kg of milk adjusted to a protein content of 4.47 % by weight and fat content of 4.03 % by weight (ratio of protein to fat = 1.11 (total fat and protein content = 8.50 % by weight)) were pasteurized at an ultimate temperature of 72 °C and then cooled. Next, lactic acid bacteria starter was added to the milk to a concentration of 2.4 % by weight and fermented for 50 minutes. Subsequently, milk coagulating enzyme in the form of rennet was added in an amount that coagulates the milk in amount 20 minutes (final concentration: 11.9 ppm) to coagulate the milk. Next, the resulting milk coagulate, namely cheese curds (roughly 1.7 kg), were cut to a size of about 5 cm. Since cutting causes water to be expelled from the cheese curds, the total amount of whey that had accumulated about 2 hours after the addition of rennet was discarded. The cheese curds were then collected and accumulated until the pH reached 5.2, after which they were milled into 2 cm squares.

On the other hand, hot water at 82 °C ± 2 °C containing a texture modifier dissolved to 10 % by weight was prepared. In the present example, the casein phospho oligopeptide mixture prepared in the aforementioned Reference Example 1 was used as texture modifier. 750 g of this hot water were added to 750 g of the aforementioned milled cheese curds and after immersing for 1 minute, the cheese curds were stretched for 2 minutes followed by gathering the stretched cheese curds. The entire amount of hot water was discharged, and 750 g of fresh hot water at 87 °C ± 2 °C containing the same amount of the texture modifier were added followed by stretching for 1 minute 30 seconds. Subsequently, the entire amount of hot water was again discharged and 450 g of the same hot water at 82 °C ± 2°C were added followed by stretching for 1 minute. The temperature of the cheese curds at completion of stretching was about 60 °C.

Following stretching, the cheese curds were transferred to a plastic mold and cooled with cold water until they reached a temperature of 10 °C to 12 °C to produce about 730 g of pizza pasta filata cheese.

### INDUSTRIAL APPLICABILITY

According to the present invention, cheese having a preferable rice cake-like elastic texture is obtained by improving the gum-like adhesive texture, hard rubber-like chewiness, and particles remaining in the mouth when eaten after baking of cheese produced by going through a step in which cheese curds are stretched in hot water.

## Claims

1. A cheese production process comprising:
stretching cheese curds in hot water the temperature of which is within the range of 80°C to 100°C; and
contacting the cheese curds and a casein phospho oligopeptide mixture capable of binding or adsorbing calcium either before or simultaneously with the stretching.

2. A cheese production process according to claim 1 further comprising:
pasteurizing raw material milk followed by fermenting, coagulating by milk coagulating enzyme, thin slicing, and crushing for preparing the cheese curds, wherein
contacting the cheese curds and the casein phospho oligopeptide mixture is carried out after the thin slicing.

3. A cheese production process according to claim 1, wherein the casein phospho oligopeptide mixture is contained in the hot water the temperature of which is within the range of 80°C to 100°C.

4. A cheese production process according to claim 1, wherein the cheese is pasta filata cheese.

5. A cheese production process according to claim 1, wherein the cheese is pasta filata cheese in which the ratio of the protein content to the fat content is 1.2 or more.

6. A cheese produced by the cheese production process according to any one of claims 1 to 5.

## Patentansprüche

1. Käseherstellungsverfahren, umfassend:
Ziehen von Käsebruch in heißem Wasser, dessen Temperatur im Bereich von 80°C bis 100°C liegt; und
Inkontaktbringen des Käsebruchs und einer Casein-Phosphooligopeptid-Mischung, die Calcium inden oder adsorbieren kann, entweder vor oder gleichzeitig mit dem Ziehen.

2. Käseherstellungsverfahren nach Anspruch 1, außerdem umfassend:
Pasteurisieren von Rohmaterialmilch gefolgt von Fermentieren, Koagulieren durch milchkoagulierendes Enzym, Schneiden in dünne Scheiben und Zerteilen zum Herstellen des Käsebruchs, wobei
das Inkontaktbringen des Käsebruchs und der Casein-Phosphooligopeptid-Mischung nach dem Schneiden in dünne Scheiben durchgeführt wird.

3. Käseherstellungsverfahren nach Anspruch 1, wobei die Casein-Phosphooligopeptid-Mischung in dem heißen Wasser enthalten ist, dessen Temperatur im Bereich von 80°C bis 100°C liegt.

4. Käseherstellungsverfahren nach Anspruch 1, wobei es sich bei dem Käse um Pasta-Filata-Käse handelt.

5. Käseherstellungsverfahren nach Anspruch 1, wobei es sich bei dem Käse um Pasta-Filata-Käse handelt, in dem das Verhältnis des Proteingehalts zu dem Fettgehalt 1,2 oder mehr beträgt.

6. Käse hergestellt durch das Käseherstellungsverfahren nach eine der Ansprüche 1 bis 5.

## Revendications

1. Procédé de production de fromage comprenant :
le filage de caillés de fromagerie dans de l'eau chaude dont la température est dans la plage de 80°C à 100 °C ; et
la mise en contact des caillés de fromagerie et d'un mélange de phosphooligopeptide caséine pouvant se lier à ou adsorber le calcium soit avant, soit simultanément au filage.

2. Procédé de production de fromage selon la revendication 1, comprenant en outre :
la pasteurisation de matière première de lait suivie par la fermentation, la coagulation par une enzyme de coagulation du lait, le tranchage fin et le broyage afin de préparer les caillés de fromage, dans lequel
la mise en contact des caillés de fromage et du mélange de phosphooligopeptide caséine est réalisée après le tranchage fin.

3. Procédé de production de fromage selon la revendication 1, dans lequel le mélange de phosphooligopeptide caséine est contenu dans l'eau chaude dont la température est dans la plage de 80°C à 100°C.

4. Procédé de production de fromage selon la revendication 1, dans lequel le fromage est un fromage à pâte filée.

5. Procédé de production de fromage selon la revendication 1, dans lequel le fromage est un fromage à pâte filée dans lequel le rapport entre la teneur en protéines et la teneur en matières grasses est de 1,2 ou plus.

6. Fromage produit par le procédé de production de fromage selon l'une quelconque des revendications 1 à 5.
